Europäisches Patentamt

European Patent Office

Office européen des brevets

(11) Veröffentlichungsnummer: **0 301 480**
**A2**

(12) # EUROPÄISCHE PATENTANMELDUNG

(21) Anmeldenummer: **88112054.7**

(22) Anmeldetag: **26.07.88**

(51) Int. Cl.⁴: **H04M 1/02**

(30) Priorität: **29.07.87 DE 8710422 U**

(43) Veröffentlichungstag der Anmeldung:
**01.02.89 Patentblatt 89/05**

(84) Benannte Vertragsstaaten:
**AT BE CH DE FR GB IT LI LU NL SE**

(71) Anmelder: **Siemens Aktiengesellschaft Berlin und München**
**Wittelsbacherplatz 2**
**D-8000 München 2(DE)**

(72) Erfinder: **Nothnagel, Gerd, Ing., grad.**
**Geroltstrasse 36 / V**
**D-8000 München 2(DE)**
Erfinder: **Stögmüller, Rupert, Dipl.-Ing. (FH)**
**Parksiedlung 10**
**D-8011 Poing(DE)**

(54) **Halterung für den Handapparat eines Telefons insbesondere Autotelefons.**

(57) Die Halterung für den Handapparat eines Autotelefons besteht aus einem dreiteiligen Gehäuse, in dessen Oberteil (3) eine Verriegelungseinrichtung für den Handapparat sowie ein beleuchtbarer Einsteckschlitz für die Identitätskarte unter der Schale für den Hörer eingeordnet sind, in dessen Mittelteil (6) schräg von oben her der Kartenleser einsteckbar ist, sowie ein Beleuchtungsteil (8) für die Beleuchtung des Kartenleserschlitzes und der Verriegelungstasten (4) sowie aus einer Klemmvorrichtung für die Kabel und aus einem als Sockel (7) dienenden Unterteil in dessen nach oben nachgezogenen Schmalwände das Mittelteil einrastbar ist.

## FIG 1

EP 0 301 480 A2

## Halterung für den Handapparat eines Telefons insbesondere Autotelefons.

Die Erfindung bezieht sich auf eine Halterung für den Handapparat eines Telefons insbesondere Autotelefons, die einen Kartenleser für die Teilnehmer-Berechtigungskarte enthält, dessen Einwurfschlitz nach Entnahme des durch eine mechanische Verriegelung gehaltenen Handapparates zugänglich ist.

Ausgehend von einer derartigen Halterung liegt der Erfindung die Aufgabe zugrunde, eine Anordnung anzugeben, die die Handhabung für den Bedienenden noch weiter erleichtert und einen einfachen konstruktiven Aufbau hat.

Diese Aufgabe wird bei einer Einrichtung der eingangs genannten Art neuerungsgemäß dadurch gelöst, daß die Halterung für den Handapparat mit Bedientastatur aus folgenden Teilen besteht:

a) einem Deckel mit Aufnahmeschale und eingebauter Verriegelung mit Entriegelungstaster

b) aus einem wannenförmigen Mittelteil mit Kartenleseeinrichtung und einem Beleuchtungsteil für den Einwurfschlitz des Kartenlesens und die Verriegelungstasten

c) aus einem ebenfalls wannenförmigen Sockel mit an den Schmalseiten hochgezogenen Wänden, im Unterteil in dessen schmalen Wänden das wannenförmige Mittelteil einrastbar ist und in dem die Verbindungskabel und gegebenenfalls Kabelstecker enden.

Vorteilhafte Ausgestaltungen und Weiterbildungen der Erfindung sind in den Unteransprüchen angegeben.

Nachstehend wird die Erfindunganhand von Figuren näher erläutert.

Die Figur 1 zeigt eine Explosionsdarstellung der gesamten Anordnung.

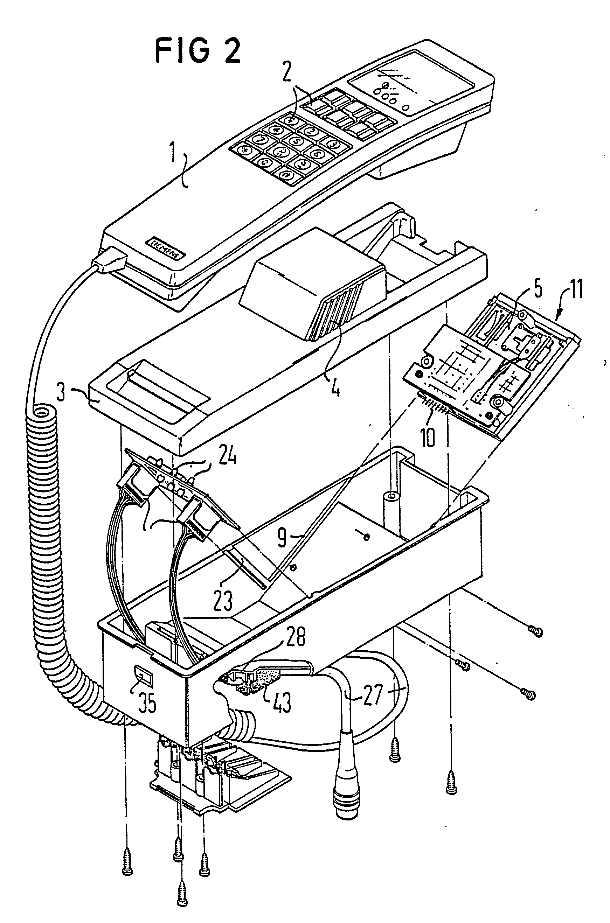

Die Figur 2 zeigt insbesondere Einzelheiten des Mittelteils des Gehäuses.

Die Figur 3 zeigt Einzelheiten des Oberteils des Gehäuses.

Die Figuren 4, 5 und 6 zeigen in Perspektive und verschiedenen Schritten die für die Kabeleinführung und -Klemmung wesentlichen Teile.

Das Gehäuse besteht aus einem Oberteil 3, der als Deckel für ein Mittelteil 6 dient und auf der Oberseite Schalen für die Aufnahme eines mit Bedienelementen 2 versehenen Handapparates 1 hat. Das Mittelteil 6 ist in einen Sockel 7 einsteckbar, dessen beide Schmalwände hochgezogen sind, so daß Rastnasen 35 am Mittelteil in entsprechende Ausnehmungen 36 in diesen Seitenwänden einrasten können.

Sämtliche Gehäuseteile sind aus Abschirmgründen innen metallisiert. Ein Kartenleser 5 für die Identitätskarte ist schräg von oben in Führungen 9 des Mittelteils eingeschoben. Sein Einwurfschlitz 11 befindet sich in der Mulde für den Hörer. Ebenfalls schräg von oben ist in entsprechende Nuten 23 in den Seitenwänden des Mittelteils ein Beleuchtungsteil 8 in Form einer Leiterplatte eingeschoben. Dieser Beleuchtungsteil ist mit Leuchtdioden 24 bestückt, die die nachfolgend beschriebene Haube 12 anstrahlen. Die Platte 8 dient ferner der steckbaren Verbindung zwischen Steckanschlüssen 10 des Kartenlesers und rückseitigen Steckanschlüssen 26 für die Signal- und Stromversorgungsleitungen 27.

Im mittleren Abschnitt des Oberteils 3 ist eine Erhebung vorgesehen, an deren Seitenwänden sich Tasten 4 für die später zu beschreibende Verriegelungsvorrichtung für den Handapparat 1 befinden.

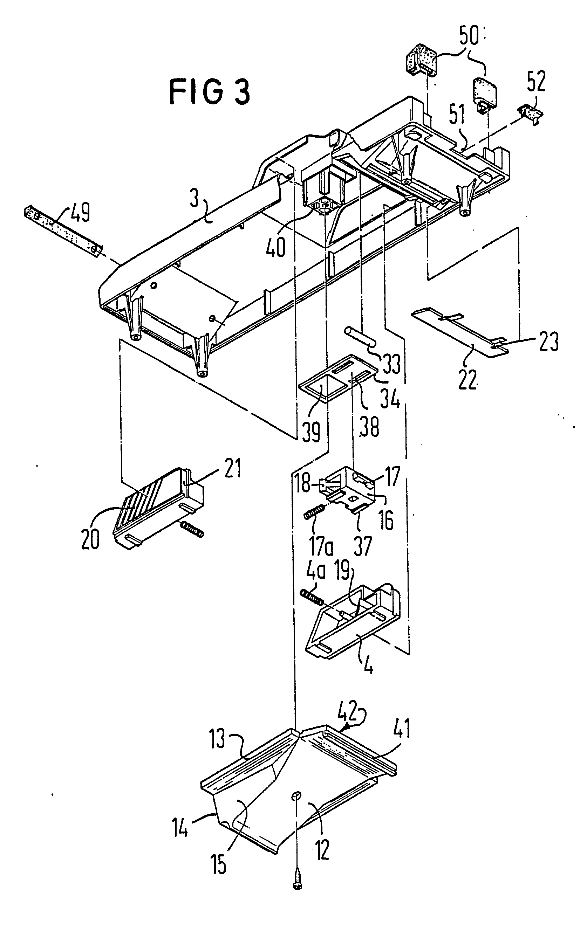

Die Verriegelungsvorrichtung besteht, wie aus Figur 3 besser ersichtlich ist, aus einem Klinkengehäuse 16, aus dem in Richtung zum Hörer durch die entsprechende Mulde hindurch eine Rastnase 17 in den Hörer eingreift. Diese Nase ist durch eine Feder 17a im Normalfall vorgespannt. Die Rastnase setzt sich im Inneren des Klinkengehäuses 16 auf Schrägflächen 18 fort, die zusammen mit spiegelbildlichen Schrägflächen 19 in den Entriegelungstasten 4 ein Schiebegetriebe für die Entriegelung bilden. Die Tasten 4 sind im Normalfall durch Federn 4a nach außen vorgespannt Das Klinkengehäuse 16 liegt mit länglichen oberen Erhebungen 37 in entsprechenden Ausnehmungen 38 in einem Blech 34 fest und das Blech 34 ist mit der quadratischen Ausnehmung 39 über einen Haltebock 40 gesteckt. Als untere Halterung für das Klinkengehäuse dient eine Haube 12, die von unten her mit dem Haltebock 40 verschraubbar ist. Diese Haube wird von einer rückseitigen Wand 14 her vom Beleuchtungsteil 8 angestrahlt und ist im ganzen aus fluoreszierendem Kunststoff hergestellt. Auf Abflachungen 13 der Seitenwände 15 der Haube gleiten die Betätigungstasten 4 für die Verriegelung des Handapparates. Gleichzeitig werden von diesen Abflachungen 13 aus die Betätigungstasten 4 angestrahlt. Diese Betätigungstasten sind bis auf eine undurchsichtige Griffplatte 20 ebenfalls aus fluoreszierendem Material hergestellt, so daß im zusammengebauten Zustand ein hervorragender Rand 21 der Tasten Licht abstrahlt, um das Finden der Tasten in der Dunkelheit zu erleichtern.

Die Haube 12 hat ferner einen der Wand 14 gegenüberliegenden Kragen 41, der mit einer Nut oberhalb des Karteneinwurfschlitzes in das Oberteil 3 eingreift. Beim Abheben des Handapparates wird so eine Lichtaustrittsfläche 42 sichtbar zur Kennzeichnung des Einwurfschlitzes 11 des Kartenlesers 5. Dieser Einwurfschlitz ist schließlich durch eine Klappe 22 abgedeckt, wobei an diese angegossene federnde Zungen 23, die von unten her in das Oberteil einsteckbar sind, die Klappe staubabhaltend geschlossen halten.

Schließlich befindet sich unterhalb des mittleren Abschnittes des Oberteils 3, durch das Blech 34 festgehalten, ein Stab magnet 33, der im aufgelegten Zustand des Handapparates einen Kontakt im Handapparat 1 betätigt.

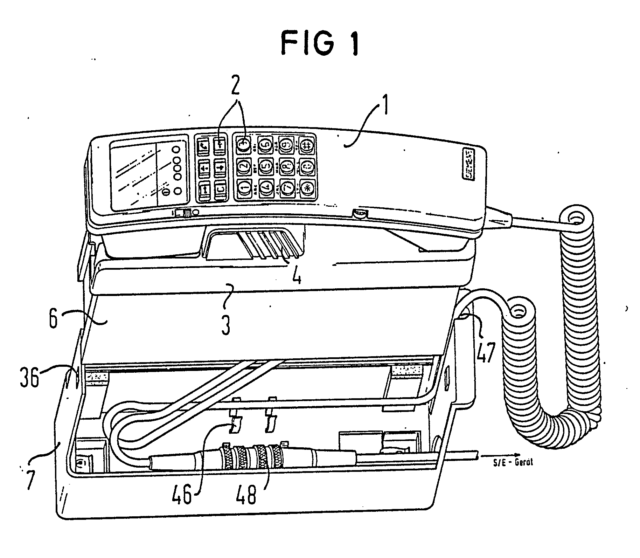

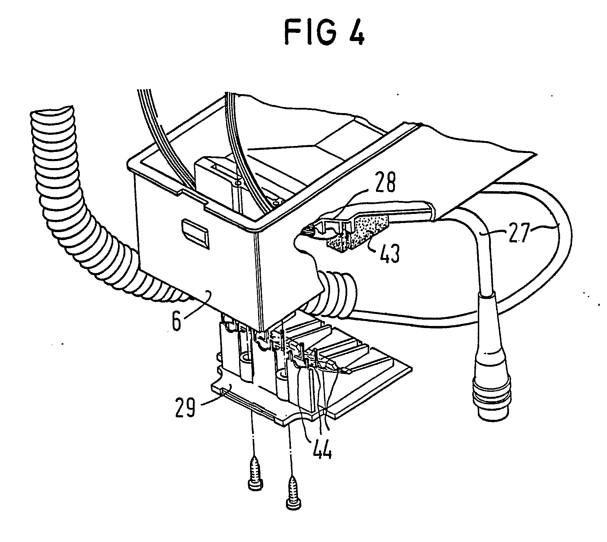

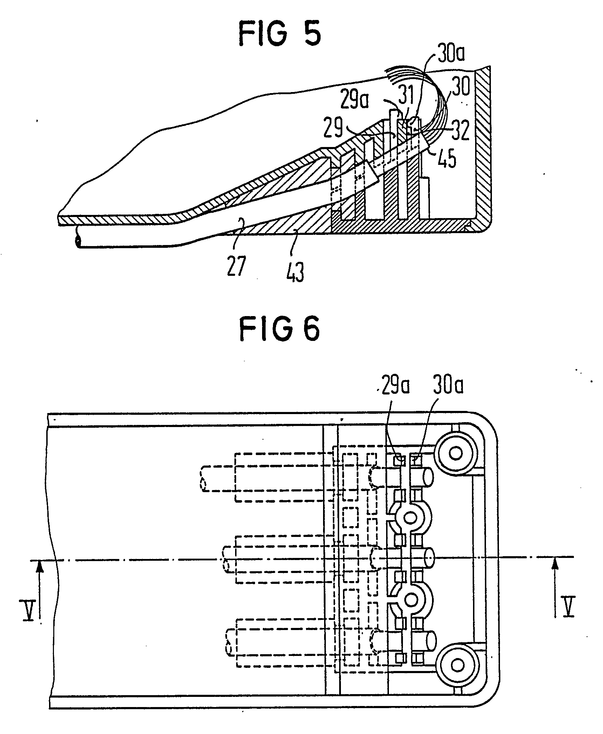

Weiterhin befindet sich in dem Abschnitt des wannenförmigen Mittelteils 6, der unterhalb der Schale für das Mikrofon des Handapparates liegt, eine Kabelklemmvorrichtung, die gleichzeitig für gute Massekontaktierung zur Abschirmung dieser Kabel sorgt. Die Kabel 27 einerseits zum Handapparat und andererseits zum Funkgerät sind, wie aus Figur 1 ersichtlich, geschlauft in den Sockel 7 eingelegt. Sie sind zunächst von unten her durch eine Kabeltülle 43 aus elastischem Material, zum Beispiel Gummi, geführt und dann auf die Kabelklemmvorrichtung, die gem. Fig. 4, 5 und 6 aus einem gesonderten Klemmstück 29 und einem Gegenstück 28 besteht, eingespannt. Das Gegenstück 28 ist Teil des wannenförmigen Mittelteils 6. Das Klemmstück 29, das mit dem Gegenstück verschraubbar ist, hat mehrere schmale getrennte Wandungsteile, zum Beispiel 44, die zur Aufnahme des Kabels an der entsprechenden Stelle halbrunde Ausnehmungen haben. Ferner sind, in Kabellängsrichtung betrachtet, beidseits des Kabels je zwei Zapfen vorgesehen. Dabei sind die längeren Zapfen 29 mit in Kabellängsrichtung verlaufenden Haken 29a ausgestattet, die den Zweck haben, das Klemmstück 29 durch Verrasterung hinter einem entsprechenden Wandungsteil 31 des Formstückes 28 zunächst festzuhalten. Die etwas kürzeren Zapfen 30 haben ebenfalls in Kabellängsrichtung spiegelbildlich zu den Haken der erstgenannten Zapfen liegende Haken 30a. Diese Haken gleiten beim Aufstecken des Klemmstückes 29 auf dem Wandungsteil 32 der Zwischenwand 31 und sorgen für gute Massekontaktierung des Klemmstückes samt Kabelabschirmgeflecht 45. Es wird auf diese Weise eine einfache Kabelklemmung für auch mehrere Kabel gleichzeitig erzielt und eine einwandfreie Massekontaktierung der Kabelabschirmgeflechte mit der Innenmetallisierung des gesamten Gehäuses. Die Masseverbindungswege sind auch zwischen den Kabeln hierdurch sehr kurz gehalten. Dies ist besonders im Kraftfahrzeugbetrieb erforderlich, da ja dort viele Störungsmöglichkeiten gegeben sind.

Das eine der Kabel ist dann geschlauft durch Klammern 46 im Sockel 7 gehalten zu einer Schmalwand geführt und dort über eine in der Seitenwand befindliche Rinne 47 nach außen geführt. Das andere zum Funkgerät führende Kabel ist über eine im Sockel befindliche und dort auch klemmend gehaltene Steckverbindung 48 direkt durch den Sockel nach außen geführt. Diese Maßnahmen dienen erheblich zur Montageerleichterung beim Einbau.

Schließlich sind als Gegenhalt für die Hörerverriegelung und vor allem für den Hörer am Ende der Schmalseite des Handapparates im Oberteil 3 Gummielemente 49, 50 enthalten. Eine Öffnung 51 auf der einen Schmalseite ist durch eine Kappe 52 abgedeckt. Durch diese Öffnung kann ein entsprechendes Werkzeug eingeführt werden, um die Verrasterung zwischen den Teilen 6 und 7 durch die Elemente 35, 36 aufzuheben.

## Ansprüche

1. Halterung für den Handapparat eines Telefons insbesondere Autotelefons, die einen Kartenleser für die Teilnehmer-Berechtigungskarte enthält, dessen Einwurfschlitz nach Entnahme des durch eine mechanische Verriegelung gehaltenen Handapparates zugänglich ist, **dadurch gekennzeichnet,** daß die Halterung für den Handapparat (1) mit Bedientastatur (2) aus folgenden Teilen besteht:

   a) einem Deckel (3) mit Aufnahmeschale und eingebauter Verriegelung mit Entriegelungstaster (4)

   b) aus einem wannenförmigen Mittelteil (6) mit Kartenleseeinrichtung (5) und einem Beleuchtungsteil (8) für den Einwurfschlitz des Kartenlesers und die Verriegelungstasten (4)

   c) aus einem ebenfalls wannenförmigen Sockel (7) mit an den Schmalseiten hochgezogenen Wänden, in darin vorgesehenen Ausnehmungen das wannenförmige Mittelteil einrastbar ist und in dem die Verbindugnskabel und gegebenenfalls Kabelstecker enden.

2. Halterung nach Anspruch 1, **dadurch gekennzeichnet,** daß in Führungen (9) des Mittelteils (6), die schräg von oben unter der Mulde für die Hörermuschel nach unten führen der Kartenleser eingesteckt ist und etwa senkrecht zu diesen Führungen seitliche Nuten (23) im Mittelteil vorgesehen sind, in die von oben her das Beleuchtungsteil (8) samt Steckereinheit für die Steckanschlüsse (10) des Kartenlesers einschiebbar ist.

3. Halterung nach Anspruch 2, **dadurch gekennzeichnet,** daß oberhalb des Kartenlesers (5) eine die Verriegelung abdeckende Haube (12) mit dem Oberteil verbunden ist, die aus fluorreszierendem Kunststoff besteht und als Lichtführung dient, wozu sie derart geformt ist, daß das Licht von einer am Beleuchtungsteil 8 angelegenen Wand (14) schräg nach oben in Richtung oberhalb des Einwurfschlitzes (11) geführt wird und an den Seitenwandungen (15) zu je einem anschließenden Kragen (13) hochgeführt wird und diese Krägen an den ebenfalls fluorreszierend ausgebildeten Betätigungstasten (4) für die Entriegelung anliegen.

4. Halterung nach Anspruch 3,
**dadurch gekennzeichnet,**
daß die Verriegelung für den Hörer aus einem etwa mittig innerhalb der oberen Gehäuseschale (3) befindlichen Klinkengehäuse (16) besteht, dessen Klinke mit einer Nase (17) in eine entsprechende Ausnehmung im Hörer des Handapparates eingreift und in der rückseitigen Fortsetzung mit schrägen Wangen (18) versehen ist, die zusammen mit schrägen Wangen (19) in den Entriegelungstasten (4) ein Schiebegetriebe für die Entriegelung bilden.

5. Halterung nach Anspruch 4,
**dadurch gekennzeichnet,**
daß die Betätigungstasten (4) aus fluorreszierendem Kunststoff bestehen, deren Außenwände als gerippte Griffplatten (20) ausgebildet sind und dort aus lichtundurchlässigem Material bestehen, so daß das Licht nur längs des rundumlaufenden Randes (21) austritt.

6. Halterung nach einem der vorhergehenden Ansprüche,
**dadurch gekennzeichnet,**
daß der Einwurfschlitz (11) des Kartenlesers durch eine Klappe (22) abgedeckt ist, die mittels angegossenen federnden Zungen (23) geschlossen gehalten wird und beim Andrücken der Identitätskarte den Einwurfschlitz (11) freigibt.

7. Halterung nach einem der vorhergehenden Ansprüche,
**dadurch gekennzeichnet,**
daß das Beleuchtungsteil (8) als Leiterplatte frontseitig mit Leuchtdioden (24) und einem Aufnahmestecker für die Anschlüsse (25) des Kartenlesers (5) versehen ist und rückseitig Steckanschlüsse (26) zum Bedienteil und zum Funkgerät trägt.

8. Halterung nach einem der vorhergehenden Ansprüche,
**dadurch gekennzeichnet,**
daß sämtliche Einzelteile des aus Kunststoff bestehenden Gehäuses innen metallisiert sind und diese Metallisierung mit Masse verbunden ist.

9. Halterung nach Anspruch 7,
**dadurch gekennzeichnet,**
daß im Gehäuseraum vom Beleuchtungsteil in Richtung zur dortigen Gehäusebegrenzung eine Klemmvorrichtung für die Kabel (27) zum Bedienteil und zum Funkgerät vorgesehen ist, bestehend aus einem schräg nach oben zu einem entsprechenden Formstück (28) im Mittelteil verlaufenden Klemmstück (29), das beidseits jedes Kabels, in dessen Längsrichtung betrachtet, jeweils zwei das Kabel zwischen sich einschließende und über das Kabel hinausragende Zapfen hat, dessen einer, längerer (29) einen Widerhaken (29a) hat, der hinter eine Zwischenwand (31) eines Formstücks im Mittelteil greift und das Klemmstück (29) vor der Verschraubung festhält und dessen anderer, kürzerer (30) an einer Fläche (32) gegenüber dem ersteren Zapfen (29) mittels einer Nase (30a) mit der Innenmetallisierung kontaktherstellend gleitet.

# FIG 1

# FIG 2

# FIG 3

# FIG 4

## FIG 5

## FIG 6